# EUROPÄISCHE PATENTSCHRIFT

(11) **EP 3 140 108 B1**
(45) Veröffentlichungstag und Bekanntmachung des Hinweises auf die Patenterteilung: **01.08.2018**
(21) Anmeldenummer: 15722924.6
(22) Anmeldetag: 07.04.2015
(51) Int. Cl.: B29D 24/00, B29C 70/52

(54) **VERFAHREN ZUR HERSTELLUNG EINES FACHWERKES**
METHOD FOR PRODUCING A FRAMEWORK
PROCÉDÉ DE FABRICATION D'UN TREILLIS

(30) Priorität: 09.05.2014 DE 102014006706
(43) Veröffentlichungstag der Anmeldung: 15.03.2017
(73) Patentinhaber: 9T Labs AG, 8005 Zürich (CH)
(72) Erfinder: EICHENHOFER, Martin, 88693 Deggenhausertal (DE); EICHENHOFER, Florian, 88693 Deggenhausertal (DE)
(74) Vertreter: Stadler, Franz
(86) Internationale Anmeldenummer: PCT/EP2015/000736
(87) Internationale Veröffentlichungsnummer: WO 2015/169414

(56) Entgegenhaltungen:
- EP-A1- 2 676 784
- DE-B3-102006 008 728
- US-A- 5 644 888
- US-A1- 2002 170 941

## Beschreibung

Die vorliegende Erfindung betrifft einen Verfahren zur Herstellung eines zweidimensionalen oder räumlichen Fachwerkes gemäß dem Oberbegriff des Anspruches 1, ein Computerprogramm und ein Computerprogrammprodukt.

Fachwerke als Konstruktionen werden in unterschiedlichen technischen Bereichen, beispielsweise im Maschinenbau und im Bauwesen eingesetzt. Insbesondere im Maschinenbau, beispielsweise im Flugzeug- oder Fahrzeugbau, sind Leichtbaukonstruktionen erwünscht, um dadurch eine Konstruktion mit einem geringen Gewicht bzw. einer geringen Masse zu erhalten. Leichtbaukonstruktionen können dabei insbesondere mittels eines Fachwerkes hergestellt werden. Das Fachwerk besteht aus einer Vielzahl von Stäben, die an den Endbereichen bzw. den Enden mit Knoten miteinander verbunden sind. Dadurch können einerseits zweidimensionale oder dreidimensionale bzw. räumliche Strukturen oder Konstruktionen hergestellt werden mit einer entsprechend großen räumlichen Ausdehnung, die trotzdem aufgrund des Einsatzes der Stäbe eine geringe Masse bzw. ein geringes Gewicht im Verhältnis zum begrenzten Bauraum aufweisen und eine große Steifigkeit und Biegefestigkeit erreichen.

Aus der DE 10 2006 008 728 B3 ist ein Verfahren zur Herstellung eines räumlichen Stabwerkes mit den nachfolgenden Schritten bekannt: Herstellen einer zweidimensionalen Gitterstruktur aus stabförmigen linearen Halbzeugen, bei der sich die Halbzeuge an definierten Kreuzungspunkten überkreuzen, Verbinden der stabförmigen linearen Halbzeuge an den Kreuzungspunkten, Erweichen der stabförmigen linearen Halbzeuge durch lokale Temperaturbeaufschlagung der Gitterstruktur entlang jeweils dreier sich nicht schneidender Geraden, Einleiten einer Kraft in die Gitterstruktur entlang der mittleren der temperaturbeaufschlagten Geraden, wobei die eingeleitete Kraft infolge einer Verformung der Gitterstruktur in Kräftepaare von in den Halbzeugen wirkenden Zugkräfte umgelenkt wird, wodurch die Gitterstruktur entlang der mittleren temperaturbeaufschlagten Geraden in eine dritte Dimension gezogen wird. Die stabförmigen linearen Halbzeugen bestehen aus Thermoplasten oder Duromeren und können zusätzlich mit Amierungsfasern versehen sein. Aufgrund des Herstellungsverfahrens ist jedoch die Herstellung des räumlichen Stabwerkes aufwendig und dadurch teuer.

Aus der US 2014/0061974 A1 ist ein Verfahren zur Herstellung eines dreidimensionalen Objektes aus einem Verbundmaterial bekannt. Zwei oder mehr Materialien werden dabei gleichzeitig als ein Verbundmaterial extrudiert.

Die Aufgabe der vorliegenden Erfindung besteht deshalb darin, ein Verfahren, ein Computerprogramm und ein Computerprogrammprodukt zur Verfügung zu stellen, mit dem ein Fachwerk preiswert und zuverlässig mit einem geringen technischen Aufwand hergestellt werden kann.

Diese Aufgabe wird gelöst mit einem Verfahren zur Herstellung eines zweidimensionalen oder räumlichen Fachwerkes mit Stäben, die an Knoten mit wenigstens einem anderen Stab und/oder einem anderen Bauteil verbunden sind, aus einem Verbundmaterial mit Fasern und einer Matrix mit den Schritten: Herstellen der Stäbe aus dem Verbundmaterial, Verbinden der Stäbe an den Knoten mit wenigstens einem anderen Stab und/oder einem anderen Bauteil, wobei die Stäbe mit Pultrusion und/oder mit Extrusion hergestellt werden und eine Pultrusionseinheit und/oder eine Extrusionseinheit im Raum bewegt wird, so dass die pultrudierten und/oder extrudierten Stäbe nach der Pultrusion und/oder Extrusion jeweils an der erforderlichen Position innerhalb des Fachwerkes pultrudiert und/oder extrudiert werden. Die Stäbe werden an der erforderlichen Position innerhalb des Fachwerkes pultrudiert und/oder extrudiert, so dass nach dem Pultrudieren und/oder Extrudieren der Stäbe, d. h. dem Herstellen der Stäbe, die Stäbe nicht mehr relativ zu anderen bereits hergestellten oder noch herzustellenden Stäbe bewegt werden müssen. Die Kosten für die Herstellung eines Fachwerkes können dadurch wesentlich reduziert werden, da die Stäbe bereits an denjenigen Positionen hergestellt werden, an welchen die Stäbe innerhalb des Fachwerkes zweidimensionale oder räumlich angeordnet sind. Eine aufwendige Anordnung bereits hergestellter Stäbe an den erforderlichen Positionen ist dadurch in vorteilhafter Weise nicht mehr erforderlich.

Insbesondere wird mit den pultrudierten und/oder extrudieren Stäbe nach dem Pultrudieren und/oder Extrudieren keine Bewegung relativ zu den anderen Stäben ausgeführt und/oder die Matrix der pultrudierten und/oder extrudierten Stäbe an der erforderlichen Position innerhalb des Fachwerkes erhärtet und/oder die Pultrusion und Extrusion wird gleichzeitig und/oder kontinuierlich ausgeführt.

In einer weiteren Ausgestaltung wird für die Herstellung der Stäbe als erster Schritt das Pultrudieren ausgeführt und als zweiter Schritt wird das Extrudieren ausgeführt, so dass die in dem ersten Schritt teilweise hergestellten pultrudierten Stäbe in dem zweiten Schritt mit Extrudieren nachbearbeitet werden und/oder jeweils ein Stab, insbesondere kontinuierlich, hergestellt wird, indem die Pultrusionseinheit und/oder Extrusionseinheit, insbesondere kontinuierlich, im Raum in einer Bewegungsbahn bewegt wird an der erforderlichen Position innerhalb des Fachwerkes für diesen Stab.

In einer ergänzenden Ausgestaltung ist die Bewegungsbahn im Wesentlichen eine Gerade und vorzugsweise schneidet die Gerade die beiden Knoten zur Verbindung dieses Stabes und/oder unterschiedliche Fachwerke werden mit unterschiedlich zueinander angeordneten Stäben hergestellt, indem die Pultrusionseinheit und/oder Extrusionseinheit in unterschiedlich zueinander positionierten Bewegungsbahnen, vorzugsweise zeitlich aufeinander folgend, bewegt wird und/oder die Pultrusionseinheit und/oder Extrusionseinheit mit einem Roboter bewegt wird und/oder nach dem Pultrudieren und/oder Extrudieren eines zuerst hergestellten Stabes und vor dem Pultrudieren und/oder Extrudieren eines anderen später hergestellten Stabes wird mit einer Schneideeinheit das Verbundmaterial mit den Fasen und der Matrix abgetrennt, vorzugsweise weist das Anfangsende des zuerst hergestellten Stabes eine andere Position auf als das Abschlussende des später hergestellten Stabes. Weist das Abschlussende des zuerst hergestellten Stabes eine andere Position auf als ein Anfangsende des später hergestellten Stabes auf, wird nach dem Extrudieren und/oder Pultrudieren des zuerst hergestellten Stabes mit der Schneideeinheit das Verbundmaterial mit den Fasern und der Matrix abgetrennt, so dass dadurch das Abschlussende des zuerst hergestellten Stabes im Raum verbleibt und anschließend wird die Extrusions- und/oder Pultrusionseinheit zu einer anderen Position bewegt und das Extrudieren und/oder Pultrudieren wird wieder aufgenommen. Die Stäbe weisen jeweils zwei Enden auf und dabei wird zuerst ein Anfangsende als Ende hergestellt und anschließend der übrige Stab und dann ein Abschlussende als Ende.

In einer Variante werden gerade Stäbe hergestellt, insbesondere werden sämtliche Stäbe gerade hergestellt und/oder Stäbe werden hergestellt deren Länge wenigstens um das 2-, 4-, 5-, 10- oder 20-Fache größer ist als der Durchmesser der Stäbe und/oder die Querschnittsform der Stäbe wird beim Extrudieren ausgebildet und/oder die Länge der Stäbe wird durch die Länge der Bewegungsbahn der Pultrusionseinheit und/oder Extrusionseinheit ausgebildet und/oder die Stäbe werden an den Knoten ohne Gelenke miteinander verbunden und/oder die Stäbe, insbesondere sämtliche Stäbe, werden ohne einem Hohlraum oder ohne einem Hohlkanal hergestellt und/oder die Enden der Stäbe werden mit den Knoten verbunden und/oder die Stäbe werden an den Knoten mit dem gleichen Verbundmaterial miteinander verbunden wie das Verbundmaterial mit denen Stäbe selbst hergestellt, insbesondere werden die Knoten wenigstens teilweise, insbesondere vollständig, mit der gleichen Pultrusionseinheit und/oder gleichen Extrusionseinheit mittels Pultrusion und/oder Extrusion hergestellt wie die Stäbe selbst, vorzugsweise wird von einem Ende und/oder einer Befestigungsfortsetzung eines Stabes ein Knoten ausgebildet. Das Fachwerk wird mit Knoten ohne Gelenke ausgebildet, so dass es sich um kein ideales Fachwerk handelt, d. h. dass an den Knoten geringe Biegemomente aufgenommen werden bzw. auftreten nach der Herstellung des Fachwerkes. Ein Fachwerk ist somit eine Konstruktion, bei der mehrere Stäbe an den beiden Enden der Stäbe, d.h. einem Anfangsende und einem Abschlussende, mit wenigstens einem anderen Stab und/oder einem anderen Bauteil, beispielsweise einer Platte, einem Steg und/oder einem Rohr, an einem Knoten verbunden sind. In den Stäben treten somit im Wesentlichen nur Zug- und Druckkräfte auf, wodurch das Fachwerk eine große Tragfähigkeit aufweist. Aufgrund der Ausbildung der Knoten ohne einem reibungsfreien Gelenk treten jedoch im Bereich der Knoten sowie an den Stäben, insbesondere in der Nähe der Knoten, geringe Biegemomente auf.

Zweckmäßig werden die Fasern und vorzugsweise die Matrix kontinuierlich zuerst durch die Pultrusionseinheit und anschließend durch die Extrusionseinheit gefördert und/oder Hybridgarne mit Fasern und Matrix werden zu der Pultrusionseinheit gefördert oder die Fasern und die Matrix wird getrennt zu der Pultrusionseinheit gefördert und/oder die Fasern oder die Hybridgarne werden von Rollen abgewickelt und zu der Pultrusionseinheit gefördert und/oder die Stäbe, insbesondere sämtliche Stäbe, werden herstellt, so dass wenigstens eine Faser, vorzugsweise mehrere Fasern, an einer Außenseite der Stäbe angeordnet ist bzw. sind und/oder die Stäbe, insbesondere sämtliche Stäbe, werden herstellt, so dass wenigstens eine Faser, vorzugsweise mehrere Fasern, keine vollständige Umhüllung mit der Matrix aufweist bzw. aufweisen und/oder die Stäbe, insbesondere sämtliche Stäbe, herstellt werden, so dass zwischen den Fasern die Matrix angeordnet ist. In den Stäben sind die Fasern mittels der Matrix stoffschlüssig miteinander fest verbunden, da die Matrix erhärtet ist. Die Fasern sind dabei auch an der Außenseite der Stäbe angeordnet, so dass an der Außenseite der Stäbe die Fasern sichtbar bzw. greifbar sind. Insbesondere sind somit nicht in einem inneren Bereich der Stäbe die Fasern angeordnet und in einer äußeren Hülle die Matrix. Vielmehr sind die Fasern und die Matrix auf die Querschnittsform verteilt und zwischen den Fasern ist auch die Matrix angeordnet. Vorzugsweise umfasst dabei ein Stab beispielsweise wenigstens zwei, drei, fünf oder zehn Fasern.

In einer weiteren Ausführungsform werden in der Pultrusionseinheit während der Pultrusion mittels der Matrix die Fasern stoffschlüssig miteinander verbunden, insbesondere indem die Matrix erwärmt und/oder erhärtet wird und/oder die Matrix wird während des Fördern von der Pultrusionseinheit zu der Extrusionseinheit abgekühlt und/oder erhärtet, so dass dadurch die Fasern stoffschlüssig miteinander verbunden werden und/oder mittels einer Fördereinrichtung, beispielsweise zwei Förderrädern, werden die Fasern und die Matrix gefördert, insbesondere indem die Fördereinrichtung auf die Fasern mit der Matrix während des Fördern der Fasern mit der Matrix von der Pultrusionseinheit zu der Extrusionseinheit auf die Fasern mit der Matrix einwirkt und/oder die Fasern und die Matrix werden mittels Pultrusion zuerst stoffschlüssig, insbesondere mittels Erwärmen und/oder Erhärten der Matrix, miteinander verbunden und anschließend wird beim Extrudieren in der Extrusionseinheit die Querschnittsform der Stäbe ausgeformt und/oder die Stäbe werden mit einem maximalen Durchmesser zwischen 1 mm und 30 mm, insbesondere zwischen 2 mm und 20 mm, extrudiert.

In einer weiteren Ausführungsform werden in der Extrusionseinheit die Fasern mit der Matrix erwärmt und/oder in der Extrusionseinheit wird die Querschnittsform, vorzugsweise kreisförmig, ellipsenförmig oder rechteckig, der Stäbe ausgeformt während des Extrudierens und/oder in der Pultrusionseinheit werden die Fasern mit der Matrix zuerst erwärmt, während das Fördern der Fasern mit der Matrix von der Pultrusionseinheit zu der Extrusionseinheit die Fasen abkühlen und in der Extrusionseinheit der Fasern mit der Matrix nochmals erwärmt werden und/oder die Fasern werden mit der Matrix in der Pultrusionseinheit mit einer, vorzugsweise ersten, Kühleinrichtung, aktiv gekühlt und/oder die Fasern werden mit der Matrix nach dem Fördern durch die Extrusionseinheit mit einer, vorzugsweise zweiten, Kühleinrichtung, beispielsweise einem Gebläse, aktiv gekühlt. Die zweite Kühleinrichtung wird dabei insbesondere dahingehend betrieben, dass dies in Abhängigkeit von der Geschwindigkeit der Extrusion der Fasern mit der Matrix abhängt. Je schneller die Fasern mit der Matrix extrudiert werden, desto stärker wird die Kühleinrichtung betrieben und umgekehrt. Die zweite Kühleinrichtung ist somit erforderlich, um die Stäbe gerade herstellen zu können.

In einer weiteren Ausgestaltung werden die Stäbe mit Kunststoff, vorzugsweise thermoplastischen oder duroplastischen Kunststoff, oder einem Harz als Matrix hergestellt und/oder die Stäbe werden mit Fasern als Glasfasern, Karbonfasern und/oder Aramidfasern, hergestellt und/oder die Stäbe werden ausschließlich aus Matrix und Fasern hergestellt und/oder die Stäbe werden hergestellt, so dass der Massenanteil oder Volumenanteil der Fasern wenigstens 30%, 40%, 60% oder 80% beträgt und/oder die Stäbe werden hergestellt, so dass der Massenanteil oder Volumenanteil der Matrix weniger als 70%, 60%, 40% oder 20% beträgt und/oder die Stäbe werden hergestellt, so dass die Stäbe ausschließlich aus den Fasern und der Matrix ausgebildet sind.

In einer ergänzenden Ausgestaltung werden die Stäbe, insbesondere sämtliche Stäbe, hergestellt, so dass die Länge der Fasern, insbesondere sämtlicher Fasern, in je einem Stab im Wesentlichen der Länge des Stabes entspricht. Im Wesentlichen bedeutet dabei, dass die Länge der Stäbe mit einer Abweichung von weniger als 30%, 20%, 10% oder 5% der Länge der Fasern in den jeweiligen Stäben entspricht.

In einer ergänzenden Variante werden die Stäbe des Fachwerkes mit wenigstens einem Bauteil, insbesondere wenigstens einer Platte, formschlüssig und/oder stoffschlüssig verbunden, vorzugsweise indem eine Befestigungsfortsetzung der Stäbe werden wenigstens teilweise innerhalb einer Aussparung an dem Bauteil hergestellt wird, insbesondere analog der Herstellung der Stäbe und/oder die Stäbe des Fachwerkes werden mit wenigstens einem Bauteil, insbesondere wenigstens einer Platte, formschlüssig und/oder stoffschlüssig verbunden, vorzugsweise indem das Bauteil teilweise erwärmt wird, so dass das teilweise erwärmte Material des Bauteils mit der erwärmten Matrix der Stäbe stoffschlüssig verbunden wird.

In einer weiteren Ausgestaltung werden die Stäbe des Fachwerkes mit mehreren Platten, beispielsweise zwei oder drei Platten, verbunden und vorzugsweise sind die Platten im Wesentlichen parallel zueinander ausgerichtet und vorzugsweise werden je zwei Platten mittels eines Fachwerkes zwischen den je zwei Platten miteinander verbunden.

In einer zusätzlichen Ausgestaltung werden zwei Stäbe mit einem Knoten miteinander verbunden, indem die Pultrusionseinheit und/oder Extrusionseinheit in einer ersten geraden Bewegungsbahnen bewegt wird und im Bereich des Knoten wird eine Änderung der Bewegungsbahn zu einer zweiten geraden Bewegungsbahn ausführt, so dass der Knoten zusammen mit den zwei Stäben mit der Pultrusionseinheit und/oder Extrusionseinheit, insbesondere einteilig, hergestellt wird und/oder ein Ende eines bereits hergestellten ersten Stabes wird mit einem noch herzustellenden zweiten Stab an einem Knoten verbunden, indem die Pultrusionseinheit und/oder Extrusionseinheit zu dem Ende des bereits hergestellten ersten Stabes geführt wird und das Ende des bereits herstellten ersten Stabes wird mit dem noch herzustellenden zweiten Stab verbunden, indem das Ende des bereits hergestellten ersten Stabes, insbesondere die Matrix des bereits hergestellten ersten Stabes an dem Ende, erwärmt wird, insbesondere mit einer Heizeinrichtung in der Extrusionseinheit, so dass während der Herstellung des zweiten Stabes die Matrix an dem ersten Stab mit der Matrix an dem zweiten Stab stoffschlüssig verbunden wird und/oder ein Ende eines bereits hergestellten ersten Stabes wird mit einem noch herzustellenden zweiten Stab an einem Knoten verbunden, indem die Pultrusionseinheit und/oder Extrusionseinheit zu dem Ende des bereits hergestellten ersten Stabes geführt wird und das Ende des bereits herstellten Stabes wird mit dem noch herzustellenden zweiten Stab verbunden, indem eine Befestigungsfortsetzung an dem Ende des zweiten Stabes hergestellt wird und die Befestigungsfortsetzung wird formschlüssig mit dem Ende des ersten Stabes verbunden, insbesondere indem die Befestigungsfortsetzung durch eine entsprechende Bewegungsbahn der Pultrusionseinheit und/oder Extrusionseinheit an das Ende des ersten Stabes um- und/oder aufgewickelt hergestellt wird,

Die Erfindung umfasst ferner ein Computerprogramm mit Programmcodemitteln, die auf einem computerlesbaren Datenträger gespeichert sind, um ein in dieser Schutzrechtsanmeldung beschriebenes Verfahren durchzuführen, wenn das Computerprogramm auf einem Computer oder einer entsprechenden Recheneinheit durchgeführt wird.

Bestandteil der Erfindung ist außerdem ein Computerprogrammprodukt mit Programmcodemitteln, die auf einem computerlesbaren Datenträger gespeichert sind, um ein in dieser Schutzrechtsanmeldung beschriebenes Verfahren durchzuführen, wenn das Computerprogramm auf einem Computer oder einer entsprechenden Recheneinheit durchgeführt wird.

Im Nachfolgenden werden Ausführungsbeispiele der Erfindung unter Bezugnahme auf die beigefügten Zeichnungen näher beschrieben.

Es zeigt:
- Fig. 1: einen vereinfachten Längsschnitt einer Prozesseinheit mit einer Pultrusionseinheit und Extrusionseinheit zur Durchführung des Verfahrens,
- Fig. 2: eine Seitenansicht der Prozesseinheit während der Durchführung des Verfahrens,
- Fig. 3: eine perspektivische Ansicht eines Fachwerkes mit zwei Platten,
- Fig. 4: eine Seitenansicht des Fachwerkes und der zwei Platten gemäß Fig. 3 und
- Fig. 5: unterschiedliche Querschnittformen für in Fig. 3 und 4 dargestellte Platten und
- Fig. 6: ein Beispiel für ein zweidimensionales Fachwerk.

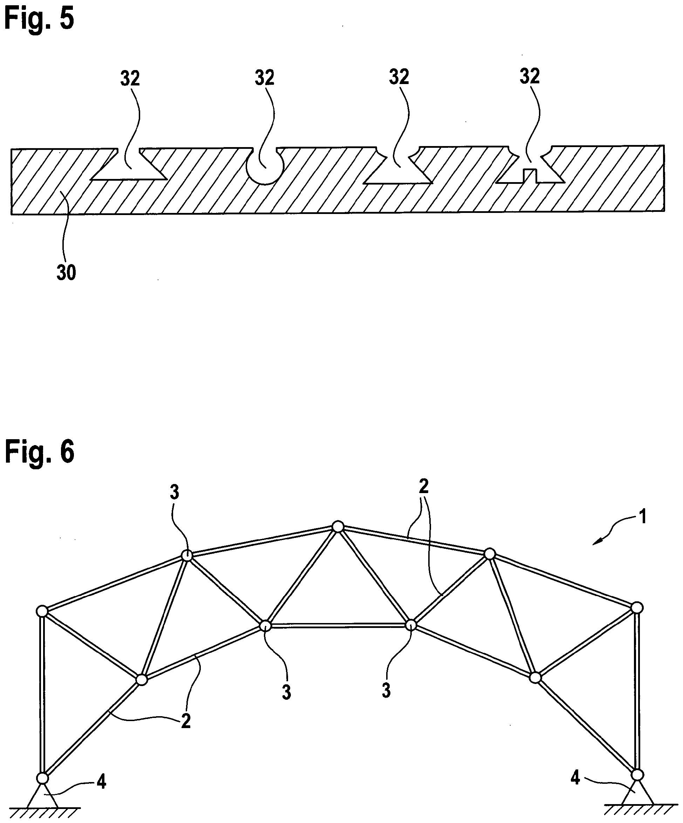

Ein in Fig. 6 dargestelltes Fachwerk 1 besteht aus einer Vielzahl von geraden Stäben 2 aus einem Verbundmaterial, nämlich mit Fasern als Glasfasern und einer Matrix als thermoplastischen Kunststoff. Die geraden Stäbe 2 sind dabei an Knoten 3 miteinander verbunden. Die Knoten 3 sind dabei mit jeweils wenigstens zwei Enden von Stäbe 2 verbunden. Die Knoten 3 sind nicht als Gelenke ausgebildet, sondern als Knoten 3 aus dem gleichen Material wie die Stäbe 2. Die Knoten 3 sind somit keine Gelenke, insbesondere keine reibungsfreien Gelenke, so dass an den Knoten 3 sowie an den Stäben 2, insbesondere im Bereich der Knoten 3, geringe Biegemomente bei einer Belastung des Fachwerkes 1 auftreten. Die Beanspruchung der Stäbe 2 erfolgt jedoch im Wesentlichen auf Druck- oder Zugkräfte. Die von dem Fachwerk 1 aufzunehmenden Kräfte werden dabei ausschließlich an den Knoten 3 in das Fachwerk 1 eingeleitet (nicht dargestellt). Das Fachwerk 1 ist mittels zweier Lagerungen 4 gelagert.

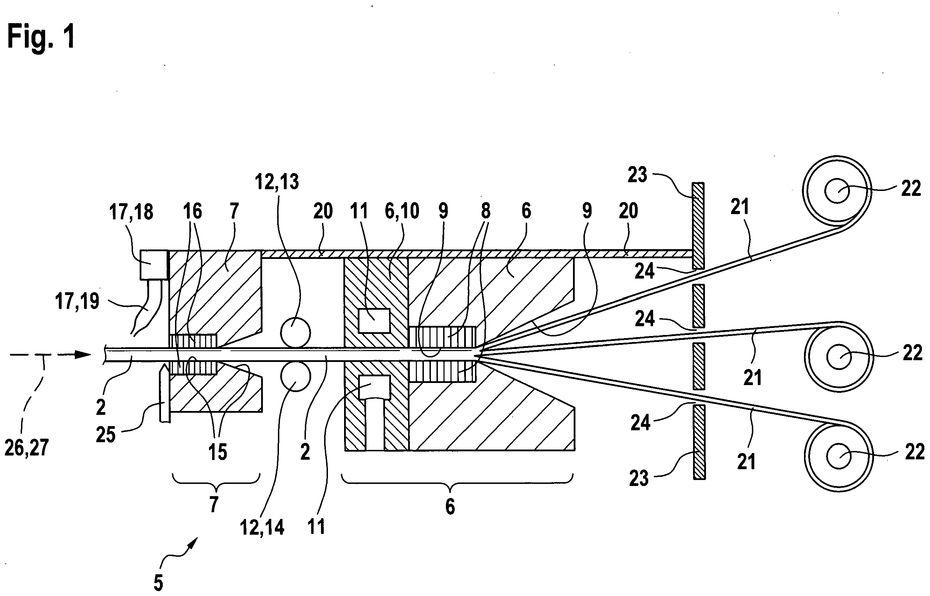

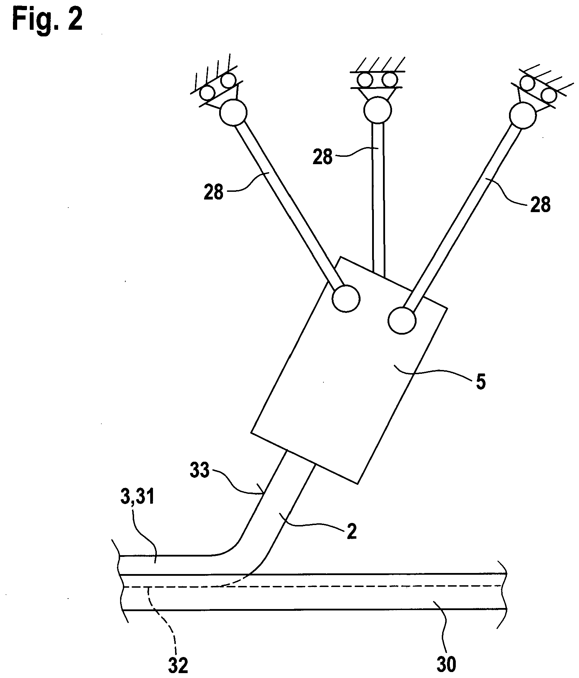

In Fig. 1 und 2 ist eine Prozesseinheit 5 zur Herstellung des Fachwerkes 1, d. h. zur Herstellung der Stäbe 2 und der Knoten 3 dargestellt. Die Prozesseinheit 5 umfasst eine Pultrusionseinheit 6 und eine Extrusionseinheit 7. In der Pultrusionseinheit 6 ist ein Pultrusionskanal 9 ausgebildet und in einer Richtung von rechts nach links gemäß der Darstellung in Fig. 1 weist der Pultrusionskanal 9 zunächst einen konisch sich verjüngenden Abschnitt und anschließend einen Abschnitt mit einem konstanten Durchmesser auf. An dem Pultrusionskanal 9 in dem Abschnitt mit dem konstanten Durchmesser ist in einer Richtung gemäß der Darstellung in Fig. 1 von rechts nach links sowie in einer Förderrichtung von Hybridgarnen 21 bzw. des herzustellenden bzw. hergestellten Stabes 2 zuerst eine erste Heizeinrichtung 8 angeordnet und anschließend eine erste Kühleinrichtung 10. An der ersten Kühleinrichtung 10 ist ein Kühlkanal 11 ausgebildet, durch den ein Kühlfluid durchgeleitet wird zur Kühlung des teilweise hergestellten Stabes. Die Extrusionseinheit 7 umfasst einen Extrusionskanal 15 und der Extrusionskanal 15 umfasst einen ersten sich konisch verjüngenden Abschnitt und einen zweiten Abschnitt mit einem konstanten Durchmesser. An dem zweiten Abschnitt des Extrusionskanales 15 mit dem konstanten Durchmesser ist eine zweite Heizeinrichtung 16 ausgebildet. Die erste und zweite Heizeinrichtung 8, 16 ist vorzugsweise als eine elektrische Widerstandsheizung ausgebildet. In der Förderrichtung des herzustellenden Stabes durch den Extrusionskanal 15 ist zuerst der konisch sich verjüngende Abschnitt des Extrusionskanales 15 und anschließend der Abschnitt des Extrusionskanales 15 mit dem konstanten Durchmesser ausgebildet. Zwischen der Pultrusionseinheit 6 und der Extrusionseinheit 7 ist eine Fördereinrichtung 12 ausgebildet. Die Fördereinrichtung 12 umfasst ein erstes Förderrad 13 und ein zweites Förderrad 14, welche von einem nicht dargestellten Elektromotor angetrieben werden. Der teilweise hergestellte Stab ist zwischen den beiden Förderräden 13, 14 angeordnet, so dass der teilweise hergestellte Stab 2 mit der Fördereinrichtung 12 aus der Pultrusionseinheit 6 herausgezogen wird und mit der Fördereinrichtung 12 in die Extrusionseinheit 7 hingeschoben wird.

Die Pultrusionseinheit 6 und die Extrusionseinheit 7 sind mit einem Verbindungsteil 20, beispielsweise einem in Fig. 1 nur teilweise dargestellten Gehäuse, miteinander verbunden. An dem Verbindungsteil 20 ist ferner ein Zuführungsteil 23 mit drei Führungsbohrungen 24 befestigt. Auf drei Rollen 22 ist jeweils ein Hybridgarn 21 aufgerollt. Das Hybridgarn 21 besteht aus einer Faser als Glasfaser und weist ferner die Matrix aus einem thermoplastischen Kunststoff auf. Die Matrix als dem thermoplastischen Kunststoff ist dabei in dem Hybridgarn 21 als eine faserförmige Matrix bzw. als eine Matrixfaser angeordnet. Das Hybridgarn 21 ist biegbar und kann somit von der Rolle 22 abgerollt werden. An der Extrusionseinheit 7 ist ferner eine zweite Kühleinheit 17 befestigt. Die zweite Kühleinheit 17 umfasst ein Gebläse 18 und ein Kühlrohr 19. Mittels des Gebläses 18 wird Umgebungsluft durch das Kühlrohr 19 geleitet, gezielt zu dem Bereich des Stabes 2 unmittelbar nach dem Verlassen der Extrusionseinheit 7. Eine Schneideeinheit 25 dient dazu, den an der Extrusionseinheit 7 extrudierten Stab 2 soweit erforderlich abzuschneiden und dadurch ein Ende als ein freies Ende des Stabes 2 herstellen zu können.

Während der Herstellung der Stäbe 2 aus dem Verbundmaterial mit den Fasern und der Matrix wird das Verbundmaterial gemäß der Darstellung in Fig. 1 zuerst durch die Pultrusionseinheit 6 und anschließend durch die Extrusionseinheit 7 mittels der Fördereinrichtung 12 gefördert, jedoch erfolgen beide Vorgänge aufgrund der Länge der Stäbe 2 und Abstandes zwischen der Pultrusionseinheit 6 und der Extrusionseinheit 7 gleichzeitig. Während des Förderns des Verbundmateriales wird somit der Hybridgarn 21 von den drei Rollen 22 abgerollt und in den konisch sich verjüngenden Abschnitt des Pultrusionskanales 9 eingeführt. An dem zweiten Abschnitt des Pultrusionskanales 9 mit dem konstanten Durchmesser werden die drei Hybridgarne 21 mit der ersten Heizeinrichtung 8 erwärmt, so dass der thermoplastische Kunststoff der Matrix an den Hybridgarnen 21 schmilzt und dadurch die Glasfasern in den drei Hybridgarnen 21 mittels der Matrix aus dem thermoplastischen Kunststoff stoffschlüssig miteinander verbunden werden als Pultrusionsvorgang. Anschließend wird das Verbundmaterial mit den Fasern und der Matrix zu dem Abschnitt des Pultrusionskanales 9 mit der ersten Kühleinrichtung 10 gefördert bzw. bewegt, so dass dadurch das Verbundmaterial mit den Glasfasern und dem thermoplastischen Kunststoff abgekühlt und dadurch erhärtet wird. Nach dem Austreten des Verbundmateriales aus den Fasern und der Matrix wird das Verbundmaterial mit der Matrix aus dem bereits teilweise hergestellten Stab 2 von der Fördereinrichtung 12 in die Extrusionseinheit 7 eingefördert bzw. hineingeführt. Aufgrund des Abkühlens des Verbundmateriales mit den Fasern in der ersten Kühleinrichtung 10 kann das Verbundmaterial mit den Fasern von der Fördereinrichtung 12 gefördert werden. In der Extrusionseinheit 7 wird das Verbundmaterial mit den Fasern und der Matrix an dem Abschnitt des Extrusionskanales 15 mit dem konstanten Durchmesser von der zweiten Heizeinrichtung 16 wieder geringfügig soweit erwärmt, dass an dem Endbereich in der Förderrichtung des Extrusionskanales 15 die abschließende Formgebung der Querschnittsform der herzustellenden Stäbe ausgeformt wird. Das in Fig. 1 linke Ende des Extrusionskanales 15 weist eine kreisförmige Querschnittsform auf, so dass dadurch mittels der Prozesseinheit 5 Stäbe 2 mit einem kreisförmigen Querschnitt hergestellt werden. Nach dem Austreten der Stäbe 2 aus dem Extrusionskanal 15 der Extrusionseinheit 7 wird von dem Gebläse 18 durch das Kühlrohr 19 Umgebungsluft als Kühlluft zu dem Stab 2 geleitet, so dass dadurch eine schnellere Abkühlung der Stäbe 2 erreicht werden kann, um eine ausreichend schnelle Herstellung der Stäbe 2 in einer geraden Längsausbildung zu ermöglichen.

Die mit dem Verfahren hergestellten Stäbe 2 sind gerade. Die Stäbe 2 werden von der Prozesseinheit 5 an den erforderlichen Positionen innerhalb des Fachwerkes 1 in der endgültigen Position hergestellt, so dass die Prozesseinheit 5 auf einer Bewegungsbahn 26 als einer Geraden 27 mittels Bewegungsarmen 28 eines in Fig. 2 stark vereinfachten Roboters bewegt wird. Die Bewegungsbahn 26 als Gerade 27 entspricht dabei der Längsachse der von der Prozesseinheit 5 hergestellten Stäbe 2. Nach der Herstellung der Stäbe 2 ist keine Relativbewegung bzw. Bewegung der hergestellten Stäbe 2 zu anderen bereits hergestellten oder noch herzustellenden Stäbe 2 erforderlich, da die Stäbe 2 mit der Prozesseinheit 5 bereits an der erforderlichen Position innerhalb des Fachwerkes 1 hergestellt werden. Dadurch können die Kosten für die Herstellung des Fachwerkes 1 mit der Prozesseinheit 5 wesentlich reduziert werden. In Fig. 2 sind die Rollen 22 und die Hybridgarne 21 nicht dargestellt.

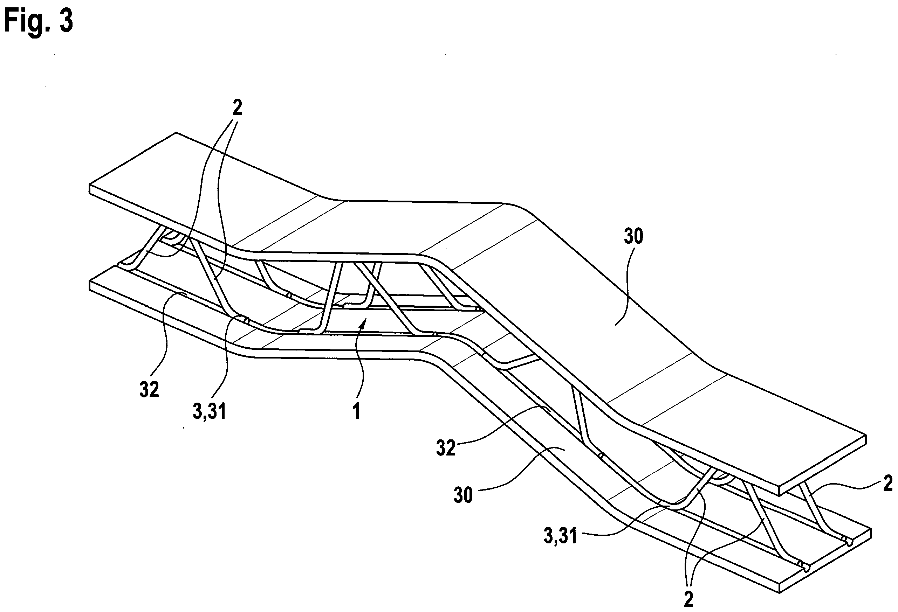

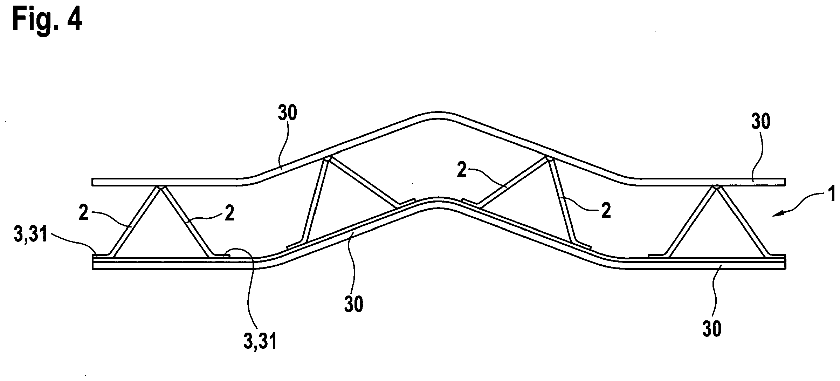

In Fig. 3 und 4 ist ein weiteres Ausführungsbeispiel für ein Fachwerk 1 dargestellt. An dem Fachwerk 1 aus Stäben 2 sind zwei Platten 30 als Bauteile 29 mit den Stäbe 2 verbunden sind. An einer Seite der unteren Platte 30 sind zwei längliche Aussparungen 32 ausgebildet. In Fig. 5 sind vier Beispiele für die Querschnittsform der Aussparungen 32 dargestellt. Die Aussparungen 32 weisen dabei einen Hinterschnitt auf, so dass nach dem Abkühlen und Erhärten des Verbundmateriales mit den Fasern und der Matrix innerhalb der Aussparung 32 eine formschlüssige Verbindung einer Befestigungsfortsetzung 31 der Stäbe 2 an den Platten 30 ausgebildet ist. Bei der Herstellung des in den Fig. 3 und 4 hergestellten Fachwerkes 1 wird die Prozesseinheit 5 zunächst dahingehend im Raum bewegt, so dass von der Prozesseinheit 5 die Befestigungsfortsetzung 31 an einem Teilabschnitt der Aussparung 32 eingeführt wird, d. h. die Befestigungsfortsetzung 31 in der Aussparung 32 teilweise angeordnet wird und somit die Prozesseinheit 5 geringfügig oberhalb der Aussparung 32 entlang bewegt wird. Anschließend wird die Prozesseinheit 5 mit einer geraden Bewegungsbahn 26 entlang der Längsachse der Stäbe 2 bewegt. Die in Fig. 3 und 4 untere dargestellte Platte 30 weist somit die beiden Aussparungen 32 auf mittels denen die Befestigungsfortsetzungen 31 der Stäbe 2 an der unteren Platte 30 befestigt sind. Die Befestigungsfortsetzungen 31 bilden somit einen Knoten 3 zur Verbindung der Stäbe 2 mit der unteren Platte 30. Die untere Platte 30 besteht aus Metall. Die obere Platte 30 besteht aus einem thermoplastischen Kunststoff. Zur Verbindung der Stäbe 3 mit der oberen Platte 30 weist die Prozesseinheit 5, insbesondere die Extrusionseinheit 7, eine Zusatzheizeinrichtung auf, mittels der eine Seite der Platten 30 lokal erwärmt und dadurch der thermoplastische Kunststoff der oberen Platte 30 lokal geschmolzen werden kann. Anschließend wird die Prozesseinheit 5 zu dieser lokal erwärmten Stelle der Platte 30 geführt, so dass das extrudierte Material der Stäbe 2 bzw. Knoten 3, d.h. die Matrix der Stäbe 2 bzw. Knoten 3 sich stoffschlüssig mit dem lokal erwärmten Bereich an der Platte 30 verbindet. Die Zusatzheizeinrichtung kann auch von der zweiten Heizeinrichtung 16 gebildet sein.

Zur Herstellung eines Fachwerkes 1 mit den Stäben 2 wird somit die Prozesseinheit 5 entlang der Längsachse des herzustellenden Stabes 2 als eine gerade Bewegungsbahn 26 von einem nicht dargestellten Roboter bewegt. Bei der Herstellung der Stäbe 2 wird somit zunächst beginnend mit einem Anfangsende der Stäbe 2 das Anfangsende der Stäbe 2 hergestellt, anschließend der übrige Teil des Stabes 2 hergestellt und am Ende wird das Abschlussende der Stäbe 2 hergestellt. Schließt an einem Abschlussende eines bereits hergestellten Stabes 2 an einem Knoten 3 ein Anfangsende eines noch herzustellenden Stabes 2 an, kann von dem Roboter die Prozesseinheit 5 während des Pultrudierens und Extrudierens einfach in einer anderen Bewegungsbahn 26 als Gerade bewegt werden, entsprechend der Längsachse des anderen noch herzustellenden Stabes 2, so dass dadurch der Knoten 3 kontinuierlich und einteilig als Abschlussende eines zuerst hergestellten Stabes und als Anfangsende eines später hergestellten Stabes hergestellt werden in besonders einfacher Weise.

Darüber hinaus ist es auch möglich, mit dem Verfahren an ein bereits hergestelltes Abschlussende eines Stabes 2 oder an einen bereits hergestellten Knoten 3 an dem bereits zwei Enden von Stäben 2 miteinander verbunden sind, einen weiteren Stab 2 hierzu verbinden. Hierzu wird die Prozesseinheit 5 zu dem Ende des Stabes 2 oder dem Knoten 3 geführt und dabei die Prozesseinheit 5 dahingehend bewegt, dass das aus dem Extrusionskanal 15 extrudierte Material als dem Verbundmaterial um das Ende des Stabes 2 bzw. um den Knoten 3 herumgewickelt wird und dabei wird vorzugsweise die zweite Kühleinrichtung 17 nicht betrieben, so dass nach dem Herausfördern des Verbundmateriales aus dem Extrusionskanal 15 das Verbundmaterial weiterhin biegbar und anschmiegbar ist an das Ende des Stabes 2 bzw. an den Knoten 3. Abweichend hiervon kann die Verbindung des noch herzustellenden Stabes 2 mit dem Ende des Stabes 2 oder dem Knoten 3 auch dadurch erfolgen, dass das Ende des bereits hergestellten Stabes 2 oder der Knoten 3 mit der Zusatzeinrichtung erwärmt wird und dadurch die Matrix aus dem thermoplastischen Kunststoff geschmolzen wird, so dass anschließend bei dem Ausführen des Verbundmateriales aus dem Extrusionskanal 15 für den noch herzustellenden Stab sich die Matrix des Stabes 2 mit dem von der Zusatzeinrichtung geschmolzenen thermoplastischen Kunststoff an dem Ende des bereits hergestellten Stabes 2 oder dem Knoten 3 stoffschlüssig verbindet.

In einem weiteren, nicht dargestellten Ausführungsbeispiel der Prozesseinheit 5 sind an den Rollen 22 die Fasern, z. B. Glas-, Aramid- oder Karbonfasern, aufgewickelt und die Matrix als dem thermoplastischen Kunststoff wird gesondert in einem Behälter mit einer Behälterheizung in einem erwärmten Zustand aufbewahrt und mittels einer nicht dargestellter Matrixfördereinrichtung zu der Pultrusionseinheit 6 gefördert. Die Pultrusionseinheit 6 und die Extrusionseinheit 7 kann auch als nur ein Bauteil ausgebildet sein, indem beispielsweise nach dem Pultrudieren unmittelbar das Extrudieren, d. h. die abschließende Formgebung einer Außenseite 33 des Stabe 2 ausgeführt wird, ohne dass die Fördereinrichtung 12 zwischen der Extrusionseinheit 7 und der Pultrusionseinheit 6 angeordnet ist.

In einem weiteren, nicht dargestellten Ausführungsbeispiel wird anstelle von thermoplastischem Kunststoff als der Matrix ein duroplastischer Kunststoff eingesetzt. Der duroplastische Kunststoff wird gesondert in einem Behälter gelagert und mittels einer Matrixfördereinrichtung der Extrusionseinheit 7 und/oder der Pultrusionseinheit 6 zugeführt. Das Erhärten des duroplastischen Kunststoffes erfolgt dabei mittels einer Bestrahlung oder einer Zugabe von chemischen Additiven.

Insgesamt betrachtet sind mit dem erfindungsgemäßen Verfahren zur Herstellung des Fachwerkes 1 wesentliche Vorteile verbunden. Die Stäbe 2 und die Knoten 3 des Fachwerkes 1 sind aus einem Verbundmaterial mit Fasern und einer Matrix hergestellt. Die Prozesseinheit 5 wird dabei während der Herstellung entlang einer Längsachse des herzustellenden Stabes 2 als eine gerade Bewegungsbahn 26 bewegt, so dass dadurch die Stäbe 2 aus dem Verbundmaterial an der erforderlichen Position bereits innerhalb des Fachwerkes 2 hergestellt werden können und dadurch die Kosten für die Herstellung des Fachwerkes 1 wesentlich reduziert sind. Bei einem Einsatz des Hybridgarnes 21 ist der Anteil von der Matrix und den Fasern in den Stäben 2 konstant. Durch den Einsatz einer unterschiedlichen Anzahl an Hybridgamen 21 bzw. Fasern zur Herstellung jeweils eines Stabes 2 ist es auch möglich, Stäbe 2 mit einem unterschiedlichen Durchmesser herzustellen. Ferner können die Stäbe 2 auch in einer unterschiedlichen Querschnittsform hergestellt werden. Hierzu weist das Ende des Extrusionskanales 15 ein in Fig. 1 nicht dargestelltes austauschbares Formgebungsteil auf, so dass dadurch auch Stäbe 2 neben der beschriebenen Kreisform auch als ellipsenförmige Stäbe 2 oder rechteckförmige Stäbe 2 in der Querschnittsform einfach hergestellt werden können.

## Patentansprüche

1. Verfahren zur Herstellung eines zweidimensionalen oder räumlichen Fachwerkes (1) mit Stäben (2), die an Knoten (3) mit wenigstens einem anderen Stab (2) und/oder einem anderen Bauteil (29) verbunden sind, aus einem Verbundmaterial mit Fasern und einer Matrix mit den Schritten:
- Herstellen der Stäbe (2) aus dem Verbundmaterial,
- Verbinden der Stäbe (2) an den Knoten (3) mit wenigstens einem anderen Stab (2) und/oder dem anderen Bauteil (29),
**dadurch gekennzeichnet, dass**
die Stäbe (2) mit Pultrusion und/oder mit Extrusion hergestellt werden und eine Pultrusionseinheit (6) und/oder eine Extrusionseinheit (7) im Raum bewegt wird, so dass die pultrudierten und/oder extrudierten Stäbe (2) nach der Pultrusion und/oder Extrusion jeweils an der erforderlichen Position innerhalb des Fachwerkes (1) pultrudiert und/oder extrudiert werden.

2. Verfahren nach Anspruch 1 ,
**dadurch gekennzeichnet, dass**
mit den pultrudierten und/oder extrudieren Stäbe (2) nach dem Pultrudieren und/oder Extrudieren keine Bewegung relativ zu den anderen Stäben (2) ausgeführt wird
und/oder
die Matrix der pultrudierten und/oder extrudierten Stäbe (2) an der erforderlichen Position innerhalb des Fachwerkes (1) erhärtet und/oder
die Pultrusion und Extrusion gleichzeitig und/oder kontinuierlich ausgeführt wird.

3. Verfahren nach Anspruch 1 oder 2,
**dadurch gekennzeichnet, dass**
für die Herstellung der Stäbe (2) als erster Schritt das Pultrudieren ausgeführt wird und als zweiter Schritt das Extrudieren ausgeführt wird, so dass die in dem ersten Schritt teilweise hergestellten pultrudierten Stäbe (2) in dem zweiten Schritt mit Extrudieren nachbearbeitet werden
und/oder
jeweils ein Stab, insbesondere kontinuierlich, hergestellt wird, indem die Pultrusionseinheit und/oder Extrusionseinheit, insbesondere kontinuierlich, im Raum in einer Bewegungsbahn (26) bewegt wird an der erforderlichen Position innerhalb des Fachwerkes (1) für diesen Stab (2).

4. Verfahren nach Anspruch 3,
**dadurch gekennzeichnet, dass**
die Bewegungsbahn (26) im Wesentlichen eine Gerade (27) ist und vorzugsweise die Gerade (27) die beiden Knoten (3) zur Verbindung dieses Stabes (2) schneidet
und/oder
unterschiedliche Fachwerke (1) mit unterschiedlich zueinander angeordneten Stäben (2) hergestellt werden, indem die Pultrusionseinheit (6) und/oder Extrusionseinheit (7) in unterschiedlich zueinander positionierten Bewegungsbahnen (26), vorzugsweise zeitlich aufeinander folgend, bewegt wird
und/oder
die Pultrusionseinheit (6) und/oder Extrusionseinheit (7) mit einem Roboter bewegt wird
und/oder
nach dem Pultrudieren und/oder Extrudieren eines zuerst hergestellten Stabes (2) und vor dem Pultrudieren und/oder Extrudieren eines anderen später hergestellten Stabes (2) mit einer Schneideeinheit (25) das Verbundmaterial mit den Fasen und der Matrix abgetrennt wird, vorzugsweise das Abschlussende des zuerst hergestellten Stabes (2) eine andere Position aufweist als das Anfangsende des später hergestellten Stabes (2).

5. Verfahren nach einem oder mehreren der vorhergehenden Ansprüche,
**dadurch gekennzeichnet, dass**
gerade Stäbe (2) hergestellt werden, insbesondere sämtliche Stäbe (2) gerade hergestellt werden
und/oder
Stäbe (2) hergestellt werden deren Länge wenigstens um das 2-, 4-, 5-, 10- oder 20-Fache größer ist als der Durchmesser der Stäbe und/oder
die Querschnittsform der Stäbe (2) beim Extrudieren ausgebildet wird und/oder
die Länge der Stäbe (2) durch die Länge der Bewegungsbahn (26) der Pultrusionseinheit und/oder Extrusionseinheit ausgebildet wird und/oder
die Stäbe (2) an den Knoten (3) ohne Gelenke miteinander verbunden werden
und/oder
die Stäbe (2), insbesondere sämtliche Stäbe (2), ohne einem Hohlraum oder ohne einem Hohlkanal hergestellt werden und/oder
die Enden Stäbe (2) mit den Knoten (3) verbunden werden und/oder
die Stäbe (2) an den Knoten (3) mit dem gleichen Verbundmaterial miteinander verbunden werden wie das Verbundmaterial mit denen Stäbe (2) selbst hergestellt werden, insbesondere die Knoten (3) wenigstens teilweise, insbesondere vollständig, mit der gleichen Pultrusionseinheit (6) und/oder gleichen Extrusionseinheit (7) mittels Pultrusion und/oder Extrusion hergestellt werden wie die Stäbe (2) selbst, vorzugsweise von einem Ende und/oder einer Befestigungsfortsetzung (31) eines Stabes (2) ein Knoten (3) ausgebildet wird.

6. Verfahren nach einem oder mehreren der vorhergehenden Ansprüche,
**dadurch gekennzeichnet, dass**
die Fasern und vorzugsweise die Matrix kontinuierlich zuerst durch die Pultrusionseinheit (6) und anschließend durch die Extrusionseinheit (7) gefördert werden
und/oder
Hybridgarne (21) mit Fasern und Matrix zu der Pultrusionseinheit (6) gefördert werden oder die Fasern und die Matrix getrennt zu der Pultrusionseinheit (6) gefördert werden
und/oder
die Fasern oder die Hybridgarne von Rollen (22) abgewickelt und zu der Pultrusionseinheit (6) gefördert werden
und/oder
die Stäbe (2), insbesondere sämtliche Stäbe (2), herstellt werden, so dass wenigstens eine Faser, vorzugsweise mehrere Fasern, an einer Außenseite (33) der Stäbe (2) angeordnet ist bzw. sind und/oder
die Stäbe (2), insbesondere sämtliche Stäbe (2), herstellt werden, so dass wenigstens eine Faser, vorzugsweise mehrere Fasern, keine vollständige Umhüllung mit der Matrix aufweist bzw. aufweisen und/oder
die Stäbe (2), insbesondere sämtliche Stäbe (2), herstellt werden, so dass zwischen den Fasern die Matrix angeordnet ist.

7. Verfahren nach einem oder mehreren der vorhergehenden Ansprüche,
**dadurch gekennzeichnet, dass**
in der Pultrusionseinheit (6) während der Pultrusion mittels der Matrix die Fasern stoffschlüssig miteinander verbunden werden, insbesondere indem die Matrix erwärmt und/oder erhärtet wird und/oder
die Matrix während des Fördern von der Pultrusionseinheit (6) zu der Extrusionseinheit (7) abgekühlt und/oder erhärtet wird, so dass dadurch die Fasern stoffschlüssig miteinander verbunden werden und/oder
mittels einer Fördereinrichtung (12), beispielsweise zwei Förderrädern (13, 14), die Fasern und die Matrix gefördert werden, insbesondere indem die Fördereinrichtung (12) auf die Fasern mit der Matrix während des Fördern der Fasern mit der Matrix von der Pultrusionseinheit (6) zu der Extrusionseinheit (7) auf die Fasern mit der Matrix einwirkt
und/oder
die Fasern und die Matrix mittels Pultrusion zuerst stoffschlüssig, insbesondere mittels Erwärmen und/oder Erhärten der Matrix, miteinander verbunden werden und anschließend beim Extrudieren in der Extrusionseinheit (6) die Querschnittsform der Stäbe ausgeformt wird
und/oder
die Stäbe (2) mit einem maximalen Durchmesser zwischen 1 mm und 30 mm, insbesondere zwischen 2 mm und 20 mm, extrudiert werden.

8. Verfahren nach einem oder mehreren der vorhergehenden Ansprüche,
**dadurch gekennzeichnet, dass**
in der Extrusionseinheit (6) die Fasern mit der Matrix erwärmt werden und/oder
in der Extrusionseinheit (6) die Querschnittsform, vorzugsweise kreisförmig, ellipsenförmig oder rechteckig, der Stäbe (2) ausgeformt wird während des Extrudierens
und/oder
in der Pultrusionseinheit (6) die Fasern mit der Matrix zuerst erwärmt werden, während der Fördern der Fasern mit der Matrix von der Pultrusionseinheit (6) zu der Extrusionseinheit (7) die Fasen abkühlen und in der Extrusionseinheit (7) der Fasern mit der Matrix nochmals erwärmt werden
und/oder
die Fasern mit der Matrix in der Pultrusionseinheit (6) mit einer, vorzugsweise ersten, Kühleinrichtung (10), aktiv gekühlt werden und/oder
die Fasern mit der Matrix nach dem Fördern durch die Extrusionseinheit (7) mit einer, vorzugsweise zweiten, Kühleinrichtung (17), beispielsweise einem Gebläse (18), aktiv gekühlt werden.

9. Verfahren nach einem oder mehreren der vorhergehenden Ansprüche,
**dadurch gekennzeichnet, dass**
die Stäbe (2) mit Kunststoff, vorzugsweise thermoplastischen oder duroplastischen Kunststoff, als Matrix hergestellt werden und/oder
die Stäbe (2) mit Fasern als Glasfasern, Karbonfasern und/oder Aramidfasern, hergestellt werden
und/oder
die Stäbe (2) ausschließlich aus Matrix und Fasern hergestellt werden und/oder
die Stäbe (2) hergestellt werden, so dass der Massenanteil oder Volumenanteil der Fasern wenigstens 30%, 40%, 60% oder 80% beträgt
und/oder
die Stäbe (2) hergestellt werden, so dass der Massenanteil oder Volumenanteil der Matrix weniger als 70%, 60%, 40% oder 20% beträgt
und/oder
die Stäbe (2) hergestellt werden, so dass die Stäbe (2) ausschließlich aus den Fasern und der Matrix ausgebildet sind.

10. Verfahren nach einem oder mehreren der vorhergehenden
Ansprüche,
**dadurch gekennzeichnet, dass**
die Stäbe (2), insbesondere sämtliche Stäbe (2), hergestellt werden, so dass die Länge der Fasern, insbesondere sämtlicher Fasern, in je einem Stab (2) im Wesentlichen der Länge des Stabes entspricht.

11. Verfahren nach einem oder mehreren der vorhergehenden Ansprüche,
**dadurch gekennzeichnet, dass**
die Stäbe (2) des Fachwerkes (1) mit wenigstens einem Bauteil (29), insbesondere wenigstens einer Platte (30), formschlüssig und/oder stoffschlüssig verbunden werden, vorzugsweise indem eine Befestigungsfortsetzung (31) der Stäbe (2) wenigstens teilweise innerhalb einer Aussparung (33) an dem Bauteil (29) hergestellt wird, insbesondere analog der Herstellung der Stäbe (2),
und/oder
die Stäbe (2) des Fachwerkes (1) mit wenigstens einem Bauteil (29), insbesondere wenigstens einer Platte (30), formschlüssig und/oder stoffschlüssig verbunden werden, vorzugsweise indem das Bauteil (29) teilweise erwärmt wird, so dass das teilweise erwärmte Material des Bauteils (29) mit der erwärmten Matrix der Stäbe (2) stoffschlüssig verbunden wird.

12. Verfahren nach einem oder mehreren der vorhergehenden
Ansprüche,
**dadurch gekennzeichnet, dass**
die Stäbe (2) des Fachwerkes (1) mit mehreren Platten (30), beispielsweise zwei oder drei Platten (30), verbunden werden und vorzugsweise die Platten (30) im Wesentlichen parallel zueinander ausgerichtet sind und vorzugsweise je zwei Platten (30) mittels eines Fachwerkes (1) zwischen den je zwei Platten (30) miteinander verbunden werden.

13. Verfahren nach einem oder mehreren der vorhergehenden Ansprüche,
**dadurch gekennzeichnet, dass**
zwei Stäbe (2) mit einem Knoten (3) miteinander verbunden werden, indem die Puttrusionseinheit (6) und/oder Extrusionseinheit (7) in einer ersten geraden Bewegungsbahnen (26) bewegt wird und im Bereich des Knoten (3) eine Änderung der Bewegungsbahn (26) zu einer zweiten geraden Bewegungsbahn (26) ausführt wird, so dass der Knoten (3) zusammen mit den zwei Stäben (2) mit der Pultrusionseinheit (6) und/oder Extrusionseinheit (7), insbesondere einteilig, hergestellt wird
und/oder
ein Ende eines bereits hergestellten ersten Stabes (2) mit einem noch herzustellenden zweiten Stab an einem Knoten verbunden wird, indem die Pultrusionseinheit (6) und/oder Extrusionseinheit (7) zu dem Ende des bereits hergestellten ersten Stabes (2) geführt wird und das Ende des bereits herstellten ersten Stabes (2) mit dem noch herzustellenden zweiten Stab (2) verbunden wird, indem das Ende des bereits hergestellten ersten Stabes (2), insbesondere die Matrix des bereits hergestellten ersten Stabes (2) an dem Ende, erwärmt wird, insbesondere mit einer Heizeinrichtung in der Extrusionseinheit (7), so dass während der Herstellung des zweiten Stabes (2) die Matrix an dem ersten Stab (2) mit der Matrix an dem zweiten Stab (2) stoffschlüssig verbunden wird
und/oder
ein Ende eines bereits hergestellten ersten Stabes (2) mit einem noch herzustellenden zweiten Stab (2) an einem Knoten (3) verbunden wird, indem die Pultrusionseinheit (6) und/oder Extrusionseinheit (7) zu dem Ende des bereits hergestellten ersten Stabes (2) geführt wird und das Ende des bereits herstellten Stabes (2) mit dem noch herzustellenden zweiten Stab (2) verbunden wird, indem eine Befestigungsfortsetzung (31) an dem Ende des zweiten Stabes (2) hergestellt wird und die Befestigungsfortsetzung (31) formschlüssig mit dem Ende des ersten Stabes (2) verbunden wird, insbesondere indem die Befestigungsfortsetzung (31) durch eine entsprechende Bewegungsbahn der Pultrusionseinheit (6) und/oder Extrusionseinheit (7) an das Ende des ersten Stabes (2) um- und/oder aufgewickelt hergestellt wird.

14. Computerprogramm mit programmcodemitteln, die auf einem computerlesbaren Datenträger gespeichert sind, um ein Verfahren gemäß einem oder mehrerer der Ansprüche 1 bis 13 durchzuführen, wenn das Computerprogramm auf einem Computer oder einer entsprechenden Recheneinheit durchgeführt wird.

15. Computerprogrammprodukt mit Programmcodemitteln, die auf einem computerlesbaren Datenträger gespeichert sind, um ein Verfahren gemäß einem oder mehrerer der Ansprüche 1 bis 13 durchzuführen, wenn das Computerprogramm auf einem Computer oder einer entsprechenden Recheneinheit durchgeführt wird.

## Claims

1. Method for producing a two-dimensional or three-dimensional framework (1) with rods (2) of a composite material with fibers and a matrix, which are connected with nodes (3) to at least one other rod (2) and/or another component (29), comprising the steps of:
- producing the rods (2) out of a composite material,
- connecting the rods (2) with at least one other rod (2) and/or another component (29) at the nodes (3),
**characterized in that**
the rods (2) are being produced with pultrusion and/or extrusion and a pultrusion unit (6) and/or an extrusion unit (7) is moved in space such that after the pultrusion and/or extrusion the pultruded and/or extruded rods (2) are pultruded and/or extruded in each case at the required position within the framework (1).

2. Method according to claim 1,
**characterized in that**
the pultruded and/or extruded rods (2) after the pultrusion and/or extrusion are not moved relative to the other rods (2)
and/or
the matrix of the pultruded and/or extruded rods (2) hardens at the required position within the framework (1)
and/or
the pultrusion and extrusion is carried out simultaneously and/or continuously.

3. Method according to claim 1 or 2,
**characterized in that**
for the production of the rods (2) the pultrusion is carried out as a first step and as a second step, the extrusion is carried out, so that the in the first step partially produced pultruded rods (2) are post-processed with extrusion
and/or
each rod (2) is produced, in particular continuously, in a way that the pultrusion unit (6) and/or extrusion unit (7), in particular continuously, is moved in space in a movement path (26) at the required position within the framework (1) for this rod (2).

4. Method according to claim 3,
**characterized in that**
the movement path (26) is mainly a straight line and preferably the straight line crosses the two nodes (3) for connecting this rod (2) and/or
different frameworks (1) are produced with rods (2) arranged differently to one another in a way that the pultrusion unit (6) and/or extrusion (7) unit is moved in differently positioned movement paths (26), preferably one after another,
and/or
the pultrusion unit (6) and/or extrusion unit (7) is moved with a robot and/or
after the pultrusion and/or extrusion of a first produced rod (2) and before the pultrusion and/or extrusion of another rod (2) produced later, with a cutting unit (25) the composite material with fibers and matrix is cut, preferably the final end of the first-produced rod (2) has a different position as the beginning end of the later-produced rod (2).

5. Method according to one or more of the preceding claims, **characterized in that**
straight rods (2) are produced, in particular all rods (2) are produced as straight rods (2)
and/or
rods are produced whose length is at least 2, 4, 5, 10 or 20 times larger than the diameter of the rods (2)
and/or
the cross-sectional shape of the rods (2) is formed during extrusion and/or
the length of the rods (2) is formed by the length of the movement path (26) of the pultrusion unit (6) and/or extrusion unit (7)
and/or
the rods (2) are connected to the nodes (3) without hinges
and/or
the rods (2), in particular all the rods (2), are made without a cavity or without a hollow channel
and/or
the ends of the rods (2) are connected to the nodes (3)
and/or
the rods (2) are connected to the nodes (3) with the same composite material as the composite material with which the rods (2) themselves are produced, especially the nodes (3) are produced at least partially, in particular completely, with the same pultrusion unit (6) and/or the same extrusion unit (7) by means of pultrusion and/or extrusion as the rods (2) themselves, preferably a node (3) is formed by one end and/or fastening extension (31) of a rod (2).

6. Method according to one or more of the preceding claims, **characterized in that**
the fibers and preferably the matrix are continuously conveyed first through the pultrusion unit (6) and subsequently through the extrusion unit (7)
and/or
hybrid yarns (21) with fibers and matrix are conveyed to the pultrusion unit (6) or the fibers and the matrix are conveyed separately to the pultrusion unit (6)
and/or
the fibers or hybrid yarns are uncoiled from coils (22) and conveyed to the pultrusion unit (6)
and/or
the rods (2), in particular all the rods (2), are produced so that at least one fiber, preferably a plurality of fibers, is or are arranged on an outer side of the rods (2)
and/or
the rods (2), in particular all the rods (2), are produced so that at least one fiber, preferably a plurality of fibers, does not have a complete covering with the matrix
and/or
the rods (2), in particular all the rods (2), are produced so that the matrix is arranged between the fibers.

7. Method according to one or more of the preceding claims, **characterized in that**
in the pultrusion unit (6) during the pultrusion by means of the matrix the fibers are connected in a material-locking manner together, in particular by heating and/or hardening the matrix
and/or
the matrix is cooled during conveying from the pultrusion unit (6) to the extrusion unit (7), so that the fibers are connected to one another in a material-locking manner
and/or
the fibers and the matrix are conveyed by means of a conveying device (12), for example with two conveyor wheels (13, 14), in particular as the conveying device (12) is acting onto the fibers with the matrix during the conveying of the fibers with the matrix from the pultrusion unit (6) to the extrusion unit (7)
and/or
the fibers and the matrix first are connected to one another in a material-locking manner by means of pultrusion, in particular by heating and/or hardening of the matrix, and then the cross-sectional shape of the rods (2) is formed during extrusion in the extrusion unit (7)
and/or
the rods (2) are produced with a maximum diameter between 1 mm and 30 mm, in particular between 2 mm and 20 mm.

8. Method according to one or more of the preceding claims, **characterized in that**
the fibers are heated with the matrix in the extrusion unit (6) and/or
in the extrusion unit (6) the cross-sectional shape, preferably circular, ellipsoidal or rectangular, of the rods (2) is formed during extrusion and/or
in the pultrusion unit (6) the fibers with the matrix are first heated, during the conveying of the fibers with the matrix from the pultrusion unit (6) to the extrusion unit (7) the fibers cool down and in the extrusion unit (6) the fibers with the matrix are reheated
and/or
in the pultrusion unit (6) the fibers with the matrix are with a, preferably first, cooling device (10) actively cooled
and/or
the fibers with the matrix after being conveyed through the extrusion unit (7) are actively cooled with a, preferably second, cooling device (17), for example a blower (18).

9. Method according to one or more of the preceding claims, **characterized in that**
the rods (2) are produced with plastic, preferably thermoplastic or thermosetting plastic
and/or
the rods (2) are produced with fibers as glass fibers, carbon fibers and/or aramid fibers
and/or
the rods (2) are made exclusively from matrix and fibers
and/or
the rods (2) are produced so that the mass fraction or volume fraction of the fibers is at least 30%, 40%, 60% or 80%
and/or
the rods (2) are produced so that the mass fraction or volume fraction of the matrix is less than 70% %, 60%, 40% or 20%,
and/or
the rods (2) are made so that the rods (2) are formed exclusively from the fibers and the matrix.

10. Method according to one or more of the preceding claims, **characterized in that**
the rods (2), in particular all the rods (2), are produced so that the length of the fibers, in particular of all the fibers, corresponds in each rod (2) mainly to the length of the rod (2).

11. Method according to one or more of the preceding claims, **characterized in that**
the rods (2) of the framework (1) are connected to at least one component (29), in particular at least one plate (30), in a form-fitting manner and/or material-locking manner, preferably by a fastening extension (31) of the rods (2) being produced at least partially within a cutout (32) of the component (29), in particular analogously to the production of the rods (2)
and/or
the rods (2) of the framework (1) are connected to at least one component (29), in particular at least one plate (30), in a form-fitting manner and/or material-locking manner, preferably by heating the component (29) partially, so that the partially heated material of the component (29) is in a material-locking manner connected to the heated matrix of the rods (2).

12. Method according to one or more of the preceding claims,
**characterized in that**
the rods (2) of the framework (1) are connected to a plurality of plates (30), for example two or three plates (30), and preferably the plates (30) are aligned essentially parallel to one another, and preferably two plates (30) are connected to each other by means of a framework (1) between the two plates (30).

13. Method according to one or more of the preceding claims, **characterized in that**
two rods (2) are connected to each other by a node (3) by moving the pultrusion unit (6) and/or extrusion unit (7) in a first straight movement path (26), and in the region of the node (3) a change of the movement path (26) to a second straight movement path (26) is performed, so that the node (3) together with the two rods (2) are produced with the pultrusion unit (6) and/or extrusion unit (7), in particular in one part, and/or
one end of an already produced first rod (2) is connected to a still to be produced second rod (2) at a node (3) by the way that the pultrusion unit (6) and/or extrusion unit (7) being moved to the end of the already existing first rod (2) and the end of the already produced first rod (2) is connected to the second rod (2) still to be produced by heating the end of the already produced first rod (2), in particular the matrix of the already produced first rod (2) at the end, in particular with a heating device in the extrusion unit (7), so that during the production of the second rod (2) the matrix in the first rod (2) is connected to the matrix in the second rod (2) in a material-locking manner
and/or
one end of an already produced first rod (2) is connected to a still to be produced second rod (2) at a node (3) by the way that the pultrusion unit (6) and/or extrusion unit (7) being moved to the end of the already existing first rod (2) and the end of the already produced first rod (2) is connected to the second rod (2) still to be produced by producing a fastening extension (31) at the end of the second rod (2) and the fastening extension (31) is in a material-locking manner connected to the end of the first rod (2), in particular as the fastening extension (31) being produced by means of a corresponding movement path of the pultrusion unit (6) and/or extrusion unit (7) at the end of the first rod (2) by wrapping and/or winding.

14. Computer program having program code means stored on a computer readable medium for carrying out a method according to one or more of the claims 1 to 13 when the computer program is performed on a computer or a corresponding computing unit.

15. Computer program product comprising program code means stored on a computer readable medium for carrying out a method according to one or more of the claims 1 to 13 when the computer program is performed on a computer or a corresponding computing unit.

## Revendications

1. Procédé de fabrication d'un treillis bidimensionnel ou spatial (1) avec des barres (2), qui sont assemblées par des noeuds (3) à au moins une autre barre (2) et/ou à un autre composant (29), en un matériau composite avec des fibres et une matrice, comportant les étapes suivantes:
- fabriquer les barres (2) à partir du matériau composite,
- assembler les barres (2) par des noeuds (3) à au moins une autre barre (2) et/ou à l'autre composant (29),
**caractérisé en ce que**
l'on fabrique les barres (2) par pultrusion et/ou par extrusion et on déplace une unité de pultrusion (6) et/ou une unité d'extrusion (7) dans l'espace, de telle manière que les barres pultrudées et/ou extrudées (2) soient après la pultrusion et/ou l'extrusion pultrudées et/ou extrudées respectivement à la position nécessaire à l'intérieur du treillis (1).

2. Procédé selon la revendication 1,
**caractérisé en ce que**
après la pultrusion et/ou l'extrusion on n'effectue avec les barres pultrudées et/ou extrudées (2) aucun mouvement par rapport aux autres barres (2) et/ou
la matrice des barres pultrudées et/ou extrudées (2) durcit à la position nécessaire à l'intérieur du treillis (1)
et/ou
on effectue la pultrusion et/ou l'extrusion de façon simultanée et/ou continue.

3. Procédé selon la revendication 1 ou 2,
**caractérisé en ce que**
pour la fabrication des barres (2) on effectue en première étape la pultrusion et en deuxième étape l'extrusion, de telle manière que les barres pultrudées partiellement fabriquées dans la première étape soient terminées par extrusion dans la deuxième étape
et/ou
on fabrique chaque fois une barre, en particulier en continu, par le fait que l'on déplace l'unité de pultrusion et/ou l'unité d'extrusion, en particulier en continu, dans l'espace suivant une trajectoire (26) vers la position nécessaire à l'intérieur du treillis (1) pour cette barre (2).

4. Procédé selon la revendication 3,
**caractérisé en ce que**
la trajectoire (26) est essentiellement une droite (27) et de préférence la droite (27) coupe les deux noeuds (3) destinés à l'assemblage de cette barre (2),
et/ou
on fabrique différents treillis (1) avec des barres (2) disposées différemment l'une par rapport à l'autre, par le fait que l'on déplace l'unité de pultrusion (6) et/ou l'unité d'extrusion (7) suivant des trajectoires (26) disposées différemment l'une par rapport à l'autre, de préférence qui se suivent dans le temps,
et/ou
on déplace l'unité de pultrusion (6) et/ou l'unité d'extrusion (7) avec un robot, et/ou
après la pultrusion et/ou l'extrusion d'une barre (2) fabriquée en premier lieu et/ou avant la pultrusion et/ou l'extrusion d'une autre barre (2) fabriquée plus tard, on tranche avec une unité de coupe (25) le matériau composite avec les fibres et la matrice, de préférence l'extrémité finale de la barre (2) fabriquée en premier lieu présente une autre position que l'extrémité initiale de la barre (2) fabriquée plus tard.

5. Procédé selon une ou plusieurs des revendications précédentes, **caractérisé en ce que**
on fabrique des barres droites (2), en particulier on fabrique toutes les barres (2) droites
et/ou
on fabrique des barres (2) dont la longueur est au moins 2, 4, 5, 10 ou 20 fois plus grande que le diamètre des barres
et/ou
on forme la forme de la section transversale des barres (2) lors de l'extrusion et/ou
on forme la longueur des barres (2) par la longueur de la trajectoire (26) de l'unité de pultrusion et/ou de l'unité d'extrusion
et/ou
on assemble les barres (2) les unes aux autres par des noeuds (3) sans articulations
et/ou
on fabrique les barres (2), en particulier toutes les barres (2) sans un espace creux ou sans un canal creux
et/ou
on assemble les extrémités des barres (2) avec les noeuds (3) et/ou
on assemble les barres (2) les unes aux autres aux noeuds (3) avec le même matériau composite que le matériau composite avec lequel on fabrique les barres (2) elles-mêmes, en particulier on fabrique les noeuds (3) au moins partiellement, en particulier entièrement, par pultrusion et/ou extrusion, avec la même unité de pultrusion (6) et/ou la même unité d'extrusion (7) que les barres (2) elles-mêmes, de préférence on forme un noeud (3) par une extrémité et/ou un prolongement de fixation (31) d'une barre (2).

6. Procédé selon une ou plusieurs des revendications précédentes, **caractérisé en ce que**
on transporte les fibres et de préférence la matrice en continu en premier lieu à travers l'unité de pultrusion (6) et ensuite à travers l'unité d'extrusion (7)
et/ou
on transporte des fils hybrides (21) avec des fibres et une matrice vers l'unité de pultrusion (6) ou on transporte les fibres et la matrice séparément vers l'unité de pultrusion (6)
et/ou
on déroule les fibres ou les fils hybrides de rouleaux (22) et on les transporte vers l'unité de pultrusion (6)
et/ou
on fabrique les barres (2), en particulier toutes les barres (2), de telle manière qu'au moins une fibre, en particulier plusieurs fibres, soit/soient disposée(s) sur un côté extérieur (33) des barres (2)
et/ou
on fabrique les barres (2), en particulier toutes les barres (2), de telle manière qu'au moins une fibre, de préférence plusieurs fibres ne présente(nt) pas d'enveloppe complète avec la matrice
et/ou
on fabrique les barres (2), en particulier toutes les barres (2), de telle manière que la matrice soit disposée entre les fibres.

7. Procédé selon une ou plusieurs des revendications précédentes, **caractérisé en ce que**
on assemble les fibres matériellement les unes aux autres dans l'unité de pultrusion (6) pendant la pultrusion au moyen de la matrice, en particulier **en ce que** l'on chauffe la matrice et/ou on la durcit
et/ou
on refroidit et/ou on durcit la matrice pendant le transport de l'unité de pultrusion (6) à l'unité d'extrusion (7), de telle manière que les fibres soient ainsi assemblées matériellement les unes aux autres
et/ou
on transporte les fibres et la matrice au moyen d'un dispositif de transport (12), par exemple au moyen de deux roues de transport (13, 14), en particulier **en ce que** le dispositif de transport (12) agit sur les fibres avec la matrice pendant le transport des fibres avec la matrice de l'unité de pultrusion (6) à l'unité d'extrusion (7) sur les fibres avec la matrice et/ou
on assemble d'abord les fibres et la matrice les unes aux autres par pultrusion matériellement, en particulier par chauffage et/ou durcissement de la matrice, et ensuite on forme la forme de la section transversale des barres lors de l'extrusion dans l'unité d'extrusion (7)
et/ou
on extrude les barres (2) avec un diamètre maximal compris entre 1 mm et 30 mm, en particulier entre 2 mm et 20 mm.

8. Procédé selon une ou plusieurs des revendications précédentes, **caractérisé en ce que**
on chauffe les fibres avec la matrice dans l'unité d'extrusion (7) et/ou
on forme la forme de la section transversale, de préférence ronde, ellipsoïdale ou rectangulaire, des barres (2) pendant l'extrusion dans l'unité d'extrusion (7)
et/ou
on chauffe d'abord les fibres avec la matrice dans l'unité de pultrusion (6), on refroidit les fibres pendant le transport des fibres avec la matrice de l'unité de pultrusion (6) à l'unité d'extrusion (7) et on chauffe de nouveau les fibres avec la matrice dans l'unité d'extrusion (7)
et/ou
on refroidit activement les fibres avec la matrice dans l'unité de pultrusion (6) avec un, de préférence premier, dispositif de refroidissement (10) et/ou
on refroidit activement les fibres avec la matrice après le transport à travers l'unité d'extrusion (7) avec un, de préférence second, dispositif de refroidissement (17), par exemple une soufflante (18).

9. Procédé selon une ou plusieurs des revendications précédentes, **caractérisé en ce que**
on fabrique les barres (2) avec une matière plastique, de préférence une matière plastique thermoplastique ou thermodurcissable, en tant que matrice et/ou
on fabrique les barres (2) avec des fibres sous forme de fibres de verre, fibres de carbone et/ou fibres d'aramide
et/ou
on fabrique les barres (2) exclusivement à partir d'une matrice et de fibres et/ou
on fabrique les barres (2), de telle manière que la proportion massique ou la proportion volumique des fibres s'élève au moins à 30 %, 40 %, 60 % ou 80 %
et/ou
on fabrique les barres (2), de telle manière que la proportion massique ou la proportion volumique de la matrice s'élève à moins de 70 %, 60 %, 40 % ou 20 %
et/ou
on fabrique les barres (2), de telle manière que les barres (2) soient constituées exclusivement des fibres et de la matrice.

10. Procédé selon une ou plusieurs des revendications précédentes, **caractérisé en ce que**
l'on fabrique les barres (2), en particulier toutes les barres (2), de telle manière que la longueur des fibres, en particulier de toutes les fibres, corresponde dans chacune des barres (2) essentiellement à la longueur de la barre (2).

11. Procédé selon une ou plusieurs des revendications précédentes, **caractérisé en ce que**
on assemble les barres (2) du treillis (1) à au moins un composant (29), en particulier au moins une plaque (30), par emboîtement et/ou matériellement, de préférence par le fait que l'on fabrique un prolongement de fixation (31) des barres (2) au moins en partie à l'intérieur d'une découpe (33) sur le composant (29), en particulier de façon analogue à la fabrication des barres (2),
et/ou
on assemble les barres (2) du treillis (1) à au moins un composant (29) en particulier au moins une plaque (30), par emboîtement et/ou matériellement, de préférence par le fait que l'on chauffe partiellement le composant (29), de telle manière que le matériau partiellement chauffé du composant (29) soit assemblé matériellement à la matrice chauffée des barres (2).

12. Procédé selon une ou plusieurs des revendications précédentes, **caractérisé en ce que**
l'on assemble les barres (2) du treillis (11) avec plusieurs plaques (30), par exemple deux ou trois plaques (30), et les plaques (30) sont de préférence orientées essentiellement parallèlement l'une à l'autre et on assemble de préférence chaque fois deux plaques (30) l'une à l'autre au moyen d'un treillis (1) entre ces deux plaques (30).

13. Procédé selon une ou plusieurs des revendications précédentes, **caractérisé en ce que**
on assemble deux barres (2) l'une à l'autre avec un noeud (3), par le fait que l'on déplace l'unité de pultrusion (6) et/ou l'unité d'extrusion (7) suivant une première trajectoire droite (26) et on effectue dans la région du noeud (3) un changement de la trajectoire (26) vers une seconde trajectoire droite (26), de telle manière que l'on fabrique le noeud (3), en particulier en une pièce, ensemble avec les deux barres (2) avec l'unité de pultrusion (6) et/ou l'unité d'extrusion (7)
et/ou
on assemble une extrémité d'une première barre déjà fabriquée (2) à une seconde barre encore à fabriquer en un noeud, par le fait que l'on guide l'unité de pultrusion (6) et/ou l'unité d'extrusion (7) vers l'extrémité de la première barre déjà fabriquée (2) et on assemble l'extrémité de la première barre déjà fabriquée (2) à l'extrémité de la barre encore à fabriquer (2), par le fait que l'on chauffe l'extrémité de la première barre déjà fabriquée (2), en particulier la matrice de la première barre déjà fabriquée (2) à l'extrémité, en particulier avec un dispositif de chauffage dans l'unité d'extrusion (7), de telle manière que pendant la fabrication de la seconde barre (2) on assemble la matrice de la première barre (2) matériellement à la matrice de la seconde barre (2)
et/ou
on assemble l'extrémité d'une première barre déjà fabriquée (2) à une seconde barre encore à fabriquer (2) en un noeud (3), par le fait que l'on guide l'unité de pultrusion (6) et/ou l'unité d'extrusion (7) vers l'extrémité de la première barre déjà fabriquée (2) et on assemble l'extrémité de la première barre déjà fabriquée (2) à la seconde barre encore à fabriquer (2), par le fait que l'on fabrique un prolongement de fixation (31) sur l'extrémité de la seconde barre (2) et que l'on assemble le prolongement de fixation (31) par emboîtement avec l'extrémité de la première barre (2), en particulier par le fait que l'on fabrique le prolongement de fixation (31) par une trajectoire correspondante de l'unité de pultrusion (6) et/ou de l'unité d'extrusion (7) sous forme bobinée et/ou enroulée sur l'extrémité de la première barre (2).

14. Programme informatique avec des moyens de codes de programme, qui sont mémorisés sur un support de données lisible par ordinateur, afin d'exécuter un procédé selon une ou plusieurs des revendications 1 à 13, lorsque le programme informatique est exécuté sur un ordinateur ou une unité de calcul correspondante.

15. Produit de programme informatique avec des moyens de codes de programme, qui sont mémorisés sur un support de données lisible par ordinateur, afin d'exécuter un procédé selon une ou plusieurs des revendications 1 à 13, lorsque le programme informatique est exécuté sur un ordinateur ou une unité de calcul correspondante.
